# EUROPEAN PATENT APPLICATION

(11) **EP 4 542 179 A1**
(43) Date of publication of application: **23.04.2025**
(21) Application number: 24206648.8
(22) Date of filing: 15.10.2024
(51) Int. Cl.: G01D 21/00, H04L 12/10, H05B 47/185

(54) **SENSOR AND DATA LINE POWER SUPPLY MODULE**

(30) Priority: 18.10.2023 CN 202311357197
(71) Applicant: Measurement Specialties (China) Ltd., Shenzhen, Guangdong 518057 (CN)
(72) Inventor: Hu, Xiang, North Shenzhen, 518057 (CN); Wang, Wei, North Shenzhen, 518057 (CN); Hu, Kejie, North Shenzhen, 518057 (CN); Huang, Yachao, North Shenzhen, 518057 (CN); Zhao, Xuetang, North Shenzhen, 518057 (CN); Chen, Kim, North Shenzhen, 518057 (CN); Lu, Hanjie, North Shenzhen, 518057 (CN)
(74) Representative: Grünecker Patent- und Rechtsanwälte PartG mbB

(57) **Abstract**

The present invention discloses a sensor and a data line power supply module. The sensor comprises of: a sensor element (1) used to detect a physical quantity of a detected object and convert the detected physical quantity into an electrical signal; a signal processing module (2) connected to the sensor element (1) for processing the received electrical signal and having a first communication interface (2a) for outputting the processed electrical signal; a signal transceiver module (3); and a data line power supply module (4) for connecting to a data line of a single pair of Ethernet to provide power to the signal processing module (2) and the signal transceiver module (3) through the data line of the single pair of Ethernet. The signal transceiver module (3) includes: a second communication interface (31a) connected to the first communication interface (2a) of the signal processing module (2) for receiving the processed electrical signal; and a single pair Ethernet interface (32b) for connecting to a single pair Ethernet device (5) to transmit the processed electrical signal through a single pair Ethernet. The present invention can improve data transmission speed and distance, simplify the structure of sensor, and reduce costs.

## Description

### CROSS-REFERENCE TO RELATED APPLICATION

This application claims the benefit of Chinese Patent Application No. CN202311357197.X filed on October 18, 2023 in the State Intellectual Property Office of China, the whole disclosure of which is incorporated herein by reference.

### BACKGROUND OF THE INVENTION

### Field of the Invention

The present invention relates to a sensor suitable for connecting to a single pair of Ethernet and a data line power supply module suitable for supplying power to various functional modules of the sensor through two data lines of the single pair of Ethernet.

### Description of the Related Art

In the prior art, a sensor typically uses wireless or wired communication. For example, the wireless sensor typically uses Bluetooth or Lora communication. The wired sensors typically use I2C/SPI communication or analog signal communication. The existing wired sensor has low data transmission rate, short data transmission distance, and multiple wiring harnesses and complex wiring.

### SUMMARY OF THE INVENTION

The present invention has been made to overcome or alleviate at least one aspect of the above mentioned disadvantages.

According to an aspect of the present invention, there is provided a sensor. The sensor comprises of a sensor element used to detect a physical quantity of a detected object and convert the detected physical quantity into an electrical signal; a signal processing module connected to the sensor element for processing the received electrical signal and having a first communication interface for outputting the processed electrical signal; a signal transceiver module; and a data line power supply module for connecting to a data line of a single pair of Ethernet to provide power to the signal processing module and the signal transceiver module through the data line of the single pair of Ethernet. The signal transceiver module includes: a second communication interface connected to the first communication interface of the signal processing module for receiving the processed electrical signal; and a single pair Ethernet interface for connecting to a single pair Ethernet device to transmit the processed electrical signal through the single pair Ethernet.

According to an exemplary embodiment of the present invention, the signal processing module comprises a microcontroller unit or an integrated circuit unit for calibrating, compensating, and amplifying the received electrical signal.

According to another exemplary embodiment of the present invention, the first communication interface of the signal processing module includes a first serial communication interface and/or a first analog communication interface, and the second communication interface of the signal transceiver module includes a second serial communication interface and/or a second analog communication interface; the second serial communication interface is used to connect with the first serial communication interface, and the second analog communication interface is used to connect with the first analog communication interface.

According to another exemplary embodiment of the present invention, the first and second serial communication interfaces include at least one of SPI communication interface, I2C communication interface, and CAN communication interface.

According to another exemplary embodiment of the present invention, the first analog communication interface and the second analog communication interface include at least one of an analog voltage communication interface and an analog current communication interface.

According to another exemplary embodiment of the present invention, the signal transceiver module comprises of a micro control unit module which has a third communication interface and said second communication interface and is used for data conversion between said second communication interface and said third communication interface; and a single pair Ethernet module which has a fourth communication interface and said single pair Ethernet interface and is used for data conversion between said fourth communication interface and said single pair Ethernet interface, the third communication interface of the micro control unit module is connected to the fourth communication interface of the single pair Ethernet module.

According to another exemplary embodiment of the present invention, the third communication interface and the fourth communication interface include at least one of MII interface, RMII interface, and SPI interface.

According to another exemplary embodiment of the present invention, the sensor is at least one of a pressure sensor, a force sensor, a temperature sensor, or a vibration sensor; the sensor element is used to detect at least one of pressure, force, temperature, or vibration of the detected object and convert the detected pressure, force, temperature, or vibration into a corresponding electrical signal.

According to another exemplary embodiment of the present invention, the data line power supply module comprises of an EMC protection circuit, whose input end is used to connect to the data line of the single pair Ethernet; a power coupling circuit, whose input end is connected to the output end of the EMC protection circuit, and whose output end is connected to DC power interfaces of the signal processing module and the signal transceiver module; and an AC coupling circuit, whose input end is connected to the output end of the EMC protection circuit, and whose output end is connected to physical layer interfaces of the signal processing module and the signal transceiver module.

According to another aspect of the present invention, there is provided a data line power supply module. The data line power supply module comprises of an EMC protection circuit, whose input end is used to connect to a data line of a single pair of Ethernet; a power coupling circuit, whose input end is connected to the output end of the EMC protection circuit, and whose output end is used to connect to DC power interfaces of various functional modules of the sensor; and an AC coupling circuit, whose input end is connected to the output end of the EMC protection circuit, and whose output end is used to connect to physical layer interfaces of various functional modules of the sensor.

According to an exemplary embodiment of the present invention, the data line power supply module further comprises of a node recognition circuit, whose input end is connected to the output end of the EMC protection circuit; an anti-surge circuit, whose input end is connected to the output end of the AC coupling circuit; and a common mode filtering circuit, whose input end is connected to the output end of the anti-surge circuit, and whose output end is used to connect to the physical layer interfaces of various functional modules of the sensor.

According to another exemplary embodiment of the present invention, the EMC protection circuit comprises a surge protection circuit. The surge protection circuit includes: a bidirectional steady-state diode TVS1, both ends of which are connected to the data lines of the single pair Ethernet; a capacitor C50, one end of which is connected to one end of the bidirectional steady-state diode TVS1, and the other end of which is grounded; and a capacitor C51, one end of which is connected to the other end of the bidirectional steady-state diode TVS1, and the other end of which is grounded.

According to another exemplary embodiment of the present invention, the EMC protection circuit further comprises a static discharge protection circuit. The static discharge protection circuit includes: a varistor MOV1, one end of which is connected to one end of the capacitor C51 and the other end of the bidirectional steady-state diode TVS1, and the other end of which is grounded; and a varistor MOV2, one end of which is connected to one end of the capacitor C50 and one end of the bidirectional steady-state diode TVS1, and the other end of which is grounded.

According to another exemplary embodiment of the present invention, the power coupling circuit comprises of: a coupling inductor L2, one ends of two coils of which are respectively connected to two output ends of the EMC protection circuit, and the other end of one coil is grounded; and a unidirectional diode D3, a positive pole of which is connected to the other end of the other coil of the coupling inductor L2, and the negative pole of which is used to connect to the DC power interfaces of various functional modules of the sensor.

According to another exemplary embodiment of the present invention, the power coupling circuit further comprises a resistor R21 used to be connected in series between the negative pole of the unidirectional diode D3 and the DC power interface of the functional module of the sensor.

According to another exemplary embodiment of the present invention, the AC coupling circuit comprises of: a capacitor C17, one end of which is connected to one output end of the EMC protection circuit; a capacitor C18, one end of which is connected to the other output end of the EMC protection circuit; a resistor R13, one end of which is connected to one end of the capacitor C17 and one output end of the EMC protection circuit, and the other end of which is grounded; and a resistor R14, one end of which is connected to one end of the capacitor C18 and the other output end of EMC protection circuit, and the other end of which is grounded.

According to another exemplary embodiment of the present invention, the node recognition circuit comprises of: a resistor R15, one end of which is connected to one output end of the EMC protection circuit; a resistor R16, one end of which is connected to the other output end of the EMC protection circuit; a capacitor C19, one end of which is connected to the other end of the resistor R15, and the other end of which is grounded; and a capacitor C20, one end of which is connected to the other end of the resistor R16, and the other end of which is grounded.

According to another exemplary embodiment of the present invention, the anti-surge circuit comprises of: a resistor R18, one end of which is connected to the other end of the capacitor C17; and a resistor R17, one end of is connected to the other end of the capacitor C18.

According to another exemplary embodiment of the present invention, the common mode filtering circuit comprises of: a coupling inductor L1, one ends of two coils of which are respectively connected to the other ends of the resistors R18 and R17; a resistor R11, both ends of which are respectively connected to two ends of one coil of the coupling inductor L1; and a resistor R12, both ends of which are respectively connected to two ends of the other coil of the coupling inductor L1, the other ends of the two coils of the coupling inductor L1 are used to connect to the physical layer interfaces of the various functional modules of the sensor.

According to another exemplary embodiment of the present invention, the data line power supply module further comprises a single pair Ethernet connector which is connected to the input end of the EMC protection circuit and is suitable for mating with a mating connector of a single pair Ethernet end, for electrically connecting the input end of the EMC protection circuit to the data line of the single pair Ethernet.

According to another aspect of the present invention, there is provided a sensor. The sensor comprises of: a sensor element used to detect a physical quantity of a detected object and convert the detected physical quantity into an electrical signal; a signal processing module connected to the sensor element for processing the received electrical signal and having a first communication interface for outputting the processed electrical signal; a signal transceiver module; and the above data line power supply module, which is used to connect to a data line of a single pair of Ethernet to provide power to the signal processing module and the signal transceiver module through the data line of the single pair of Ethernet. The signal transceiver module includes: a second communication interface connected to the first communication interface of the signal processing module for receiving the processed electrical signal; and a single pair Ethernet interface for connecting to a single pair Ethernet device to transmit the processed electrical signal through the single pair Ethernet.

In the aforementioned exemplary embodiments of the present invention, the sensor can be connected to a single pair of Ethernet, greatly improving data transmission speed and distance, and can be powered by the data line of the single pair of Ethernet. Therefore, the present invention simplifies the structure of sensor and reduces costs.

### BRIEF DESCRIPTION OF THE DRAWINGS

The above and other features of the present invention will become more apparent by describing in detail exemplary embodiments thereof with reference to the accompanying drawings, in which:
Figure 1 shows a functional module diagram of a sensor according to an exemplary embodiment of the present invention; and
Figure 2 shows a circuit diagram of a data line power supply module of a sensor according to an exemplary embodiment of the present invention.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a sensor. The sensor comprises of: a sensor element used to detect a physical quantity of a detected object and convert the detected physical quantity into an electrical signal; a signal processing module connected to the sensor element for processing the received electrical signal and having a first communication interface for outputting the processed electrical signal; a signal transceiver module; and a data line power supply module for connecting to a data line of a single pair of Ethernet to provide power to the signal processing module and the signal transceiver module through the data line of the single pair of Ethernet. The signal transceiver module includes: a second communication interface connected to the first communication interface of the signal processing module for receiving the processed electrical signal; and a single pair Ethernet interface for connecting to a single pair Ethernet device to transmit the processed electrical signal through the single pair Ethernet.

According to another general concept of the present invention, there is provided a data line power supply module. The data line power supply module comprises of an EMC protection circuit, whose input end is used to connect to a data line of a single pair of Ethernet; a power coupling circuit, whose input end is connected to the output end of the EMC protection circuit, and whose output end is used to connect to DC power interfaces of various functional modules of the sensor; and an AC coupling circuit, whose input end is connected to the output end of the EMC protection circuit, and whose output end is used to connect to physical layer interfaces of various functional modules of the sensor.

According to another general concept of the present invention, there is provided a sensor. The sensor comprises of: a sensor element used to detect a physical quantity of a detected object and convert the detected physical quantity into an electrical signal; a signal processing module connected to the sensor element for processing the received electrical signal and having a first communication interface for outputting the processed electrical signal; a signal transceiver module; and the above data line power supply module, which is used to connect to a data line of a single pair of Ethernet to provide power to the signal processing module and the signal transceiver module through the data line of the single pair of Ethernet. The signal transceiver module includes: a second communication interface connected to the first communication interface of the signal processing module for receiving the processed electrical signal; and a single pair Ethernet interface for connecting to a single pair Ethernet device to transmit the processed electrical signal through the single pair Ethernet.

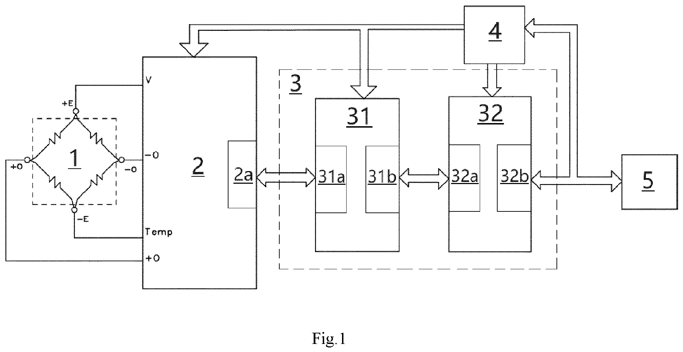

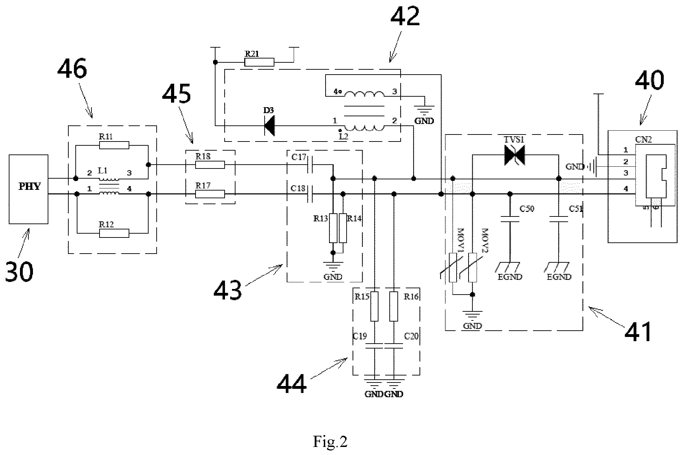

Figure 1 shows a functional module diagram of a sensor according to an exemplary embodiment of the present invention; Figure 2 shows a circuit diagram of the data line power supply module 4 of a sensor according to an exemplary embodiment of the present invention.

As shown in Figures 1 and 2, in an exemplary embodiment of the present invention, a sensor is disclosed. The sensor includes: a sensor element 1, a signal processing module 2, a signal transceiver module 3, and a power over data lines (PoDL) module 4. The sensor element 1 is used to detect a physical quantity of a detected object and convert the detected physical quantity into an electrical signal. The signal processing module 2 is connected to the sensor element 1 for processing the received electrical signal and has a first communication interface 2a for outputting the processed electrical signal. The signal transceiver module 3 has a second communication interface 31a and a single pair Ethernet interface 32b. The second communication interface 31a of the signal transmission module 3 is connected to the first communication interface 2a of the signal processing module 2 for receiving the processed electrical signal. The single pair Ethernet interface 32b of signal transmission module 3 is used to connect to a single pair Ethernet device (such as a gateway) 5 for transmitting the processed electrical signal through a single pair Ethernet (SPE). The data line power supply module 4 is used to connect to two data lines of the single pair of Ethernet to provide power to the signal processing module 2 and the signal transceiver module 3 through the two data lines of the single pair of Ethernet.

As shown in Figures 1 and 2, in the illustrated embodiments, the signal processing module 2 includes a micro control unit or an integrated circuit unit for calibrating, compensating, and amplifying the received electrical signal.

As shown in Figures 1 and 2, in the illustrated embodiment, the first communication interface 2a of the signal processing module 2 includes a first serial communication interface and/or a first analog communication interface, and the second communication interface 31a of the signal transceiver module 3 includes a second serial communication interface and/or a second analog communication interface. The second serial communication interface is used to connect with the first serial communication interface, and the second analog communication interface is used to connect with the first analog communication interface.

As shown in Figures 1 and 2, in the illustrated embodiments, the first and second serial communication interfaces include at least one of SPI communication interface, I2C communication interface, and CAN communication interface.

As shown in Figures 1 and 2, in the illustrated embodiment, the first analog communication interface and the second analog communication interface include at least one of analog voltage communication interface and analog current communication interface.

As shown in Figures 1 and 2, in the illustrated embodiments, the signal transmission and reception module 3 comprises a micro control unit module 31 and a single pair Ethernet module 32. The micro control unit module 31 has a third communication interface 31b and a second communication interface 31a, and is used for data conversion between the second communication interface 31a and the third communication interface 31b. The single pair Ethernet module 32 has a fourth communication interface 32a and a single pair Ethernet interface 32b, and is used for data conversion between the fourth communication interface 32a and the single pair Ethernet interface 32b. The third communication interface 31b of the micro control unit module 31 is connected to the fourth communication interface 32a of the single pair Ethernet module 32.

As shown in Figures 1 and 2, in the illustrated embodiments, the third communication interface 31b and the fourth communication interface 32a include at least one of MII interface, RMII interface, and SPI interface.

As shown in Figures 1 and 2, in the illustrated embodiments, the sensor can be a pressure sensor, a force sensor, a temperature sensor, or a vibration sensor. The sensor element 1 can be used to detect the pressure, force, temperature, or vibration of the detected object and convert the detected pressure, force, temperature, or vibration into corresponding electrical signals. When the sensor is a pressure sensor, the sensor element 1 includes a Wheatstone bridge composed of multiple strain gauges. However, please note that the sensors of the present invention are not limited to the listed types and can also be other types of sensors, such as humidity sensors or turbidity sensors.

As shown in Figures 1 and 2, in the illustrated embodiments, the data line power supply module 4 comprises an EMC (Electrical Compatibility) protection circuit 41, a power coupling circuit 42, and an AC coupling circuit 43. The input of EMC protection circuit 41 is used to connect two data lines of the single pair of Ethernet. The input end of power coupling circuit 42 is connected to the output end of EMC protection circuit 41, and the output end of power coupling circuit 42 is connected to the DC power interfaces of the signal processing module 2 and the signal transceiver module 3. The input end of AC coupling circuit 43 is connected to the output end of EMC protection circuit 41, and the output end of AC coupling circuit 43 is connected to the physical layer interfaces 30 of the signal processing module 2 and the signal transceiver module 3.

As shown in Figures 1 and 2, in the other exemplary embodiment of the present invention, a data line power supply module 4 is also disclosed. The data line power supply module 4 includes: an EMC protection circuit 41, a power coupling circuit 42, an AC coupling circuit 43, a node identification circuit 44, an anti surge circuit 45, and a common mode filtering (CMC) circuit 46. The input of EMC protection circuit 41 is used to connect two data lines of the single pair of Ethernet. The input end of power coupling circuit 42 is connected to the output end of EMC protection circuit 41, and the output end of power coupling circuit 42 is used to connect to the DC power interfaces of various functional modules 2 and 3 of the sensor. The input end of the AC coupling circuit 43 is connected to the output end of the EMC protection circuit 41. The input end of node identification circuit 44 is connected to the output end of EMC protection circuit 41. The input end of the anti-surge circuit 45 is connected to the output end of the AC coupling circuit 43. The input end of common mode filtering circuit 46 is connected to the output end of anti-surge circuit 45, and the output end of common mode filtering circuit 46 is used to connect to the physical layer (PHY) interfaces 30 of various functional modules 2 and 3 of the sensor.

As shown in Figures 1 and 2, in the illustrated embodiments, the EMC protection circuit 41 includes a surge protection circuit, which includes a bidirectional steady-state diode TVS1, a capacitor C50, and a capacitor C51. The two ends of the bidirectional steady-state diode TVS1 are respectively connected to two data lines of the single pair of Ethernet. One end of capacitor C50 is connected to one end of bidirectional steady state diode TVS1, and the other end is connected to ground EGND. One end of capacitor C51 is connected to the other end of bidirectional steady state diode TVS1, and the other end is connected to the earth ground EGND.

As shown in Figures 1 and 2, in the illustrated embodiments, the EMC protection circuit 41 further includes an electrostatic discharge protection circuit. The electrostatic discharge protection circuit includes: a varistor MOV1 and a varistor MOV2. One end of the varistor MOV1 is connected to one end of the capacitor C51 and the other end of the bidirectional steady-state diode TVS1, and the other end of the capacitor C51 is grounded to GND. One end of the varistor MOV2 is connected to one end of the capacitor C50 and one end of the bidirectional steady-state diode TVS1, while the other end of the varistor MOV2 is grounded to GND.

As shown in Figures 1 and 2, in the illustrated embodiments, the power coupling circuit 42 comprises a coupling inductor L2 and a unidirectional diode D3. One ends of the two coils of coupling inductor L2 are respectively connected to the two output ends of EMC protection circuit 41, and the other end of one coil of coupling inductor L2 is grounded to GND. The positive pole of unidirectional diode D3 is connected to the other end of the other coil of coupling inductor L2, and the negative pole of unidirectional diode D3 is used to connect to the DC power interfaces of various functional modules 2 and 3 of the sensor. In the illustrated embodiment, the power coupling circuit 42 can isolate AC and only allow DC to pass through. The coupling inductor L2 is used to filter out differential mode interference, and the unidirectional diode D3 is used to provide reverse voltage protection.

As shown in Figures 1 and 2, in the illustrated embodiments, the power coupling circuit 42 further includes a resistor R21, which is used to be connected in series between the negative pole of the unidirectional diode D3 and the DC power interface of the functional module of the sensor. The resistor R21 is used to adjust the size of the output DC level.

As shown in Figures 1 and 2, in the illustrated embodiments, the AC coupling circuit 43 includes: a capacitor C17, a capacitor C18, a resistor R13, and a resistor R14. One end of capacitor C17 is connected to one output end of EMC protection circuit 41. One end of capacitor C18 is connected to the other output end of EMC protection circuit 41. One end of resistor R13 is connected to one end of capacitor C17 and one output end of EMC protection circuit 41, and the other end of the capacitor C18 is grounded to GND. One end of resistor R14 is connected to one end of capacitor C18 and the other output end of EMC protection circuit 41, and the other end of resistor R14 is grounded to GND. In the illustrated embodiment, the AC coupling circuit 43 isolates DC with a combination of resistors R13 and R14 and capacitors C17 and C18, allowing only AC to pass through.

As shown in Figures 1 and 2, in the illustrated embodiments, the node recognition circuit 44 includes: a resistor R15, a resistor R16, a capacitor C19, and a capacitor C20. One end of resistor R15 is connected to one output end of EMC protection circuit 41. One end of resistor R16 is connected to the other output end of EMC protection circuit 41. One end of capacitor C19 is connected to the other end of resistor R15, and the other end of capacitor C19 is grounded to GND. One end of capacitor C20 is connected to the other end of resistor R16, and the other end of capacitor C20 is grounded to GND. In the illustrated embodiment, node recognition circuit 44 filters unstable level signals by combining resistors R15 and R16 with capacitors C19 and C20 to improve communication signals.

As shown in Figures 1 and 2, in the illustrated embodiments, the anti-surge circuit 45 comprises a resistor R18 and a resistor R17. One end of resistor R18 is connected to the other end of capacitor C17. One end of resistor R17 is connected to the other end of capacitor C18. In the illustrated embodiment, resistors R18 and R17 in the anti-surge circuit 45 are used to limit the surge current in the circuit.

As shown in Figures 1 and 2, in the illustrated embodiments, the common mode filtering circuit 46 includes: a coupling inductor L1, a resistor R11, and a resistor R12. One ends of the two coils of the coupling inductor L1 are respectively connected to the other ends of resistor R18 and resistor R17. The two ends of resistor R11 are respectively connected to the two ends of one coil of the coupling inductor L1. The two ends of resistor R12 are respectively connected to the two ends of the other coil of the coupling inductor L1. The other ends of the two coils of the coupling inductor L1 are used to connect to the physical layer interfaces 30 of various functional modules 2 and 3 of the sensor. In the illustrated embodiment, the coupling inductance L1, resistor R11, and resistor R12 in the common mode filtering circuit 46 are used to filter the common mode electromagnetic interference signal.

As shown in Figures 1 and 2, in the illustrated embodiments, the data line power supply module further comprises a single pair Ethernet connector 40, which is connected to the input end of the EMC protection circuit 41 and is suitable for mating with a mating connector (not shown) of the single pair Ethernet end, for electrically connecting the input end of the EMC protection circuit 41 to the two data lines of the single pair Ethernet.

As shown in Figures 1 and 2, in the other exemplary embodiment of the present invention, a sensor is also disclosed. The sensor includes: a sensor element 1, a signal processing module 2, a signal transceiver module 3, and a data line power supply module 4 as shown in Figure 2. The sensor element 1 is used to detect the physical quantity of the detected object and convert the detected physical quantity into an electrical signal. The signal processing module 2 is connected to the sensor element 1 for processing the received electrical signal and has a first communication interface 2a for outputting the processed electrical signal. The signal transceiver module 3 has a second communication interface 31a and a single pair Ethernet interface 32b. The second communication interface 31a of the signal transmission module 3 is connected to the first communication interface 2a of the signal processing module 2 for receiving the processed electrical signal. The single pair Ethernet interface 32b of the signal transmission module 3 is used to connect to a single pair Ethernet device (such as a gateway) 5 for transmitting the processed electrical signal through the single pair Ethernet (SPE). The data line power supply module 4 is used to connect two data lines of the single pair of Ethernet to provide power to the signal processing module 2 and the signal transceiver module 3 through the two data lines of the single pair of Ethernet.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A sensor, comprising:
a sensor element (1) used to detect a physical quantity of a detected object and convert the detected physical quantity into an electrical signal;
a signal processing module (2) connected to the sensor element (1) for processing the received electrical signal and having a first communication interface (2a) for outputting the processed electrical signal;
a signal transceiver module (3), including:
a second communication interface (31a) connected to the first communication interface (2a) of the signal processing module (2) for receiving the processed electrical signal; and
a single pair Ethernet interface (32b) for connecting to a single pair Ethernet device (5) to transmit the processed electrical signal through a single pair Ethernet; and
a data line power supply module (4) for connecting to a data line of the single pair of Ethernet to provide power to the signal processing module (2) and the signal transceiver module (3) through the data line of the single pair of Ethernet.

2. The sensor according to claim 1,
wherein the signal processing module (2) comprises a microcontroller unit or an integrated circuit unit for calibrating, compensating, and amplifying the received electrical signal, and/or
wherein the first communication interface (2a) of the signal processing module (2) includes a first serial communication interface and/or a first analog communication interface, and the second communication interface (31a) of the signal transceiver module (3) includes a second serial communication interface and/or a second analog communication interface;
wherein the second serial communication interface is used to connect with the first serial communication interface, and the second analog communication interface is used to connect with the first analog communication interface, and/or
wherein the first and second serial communication interfaces include at least one of SPI communication interface, I2C communication interface, and CAN communication interface; and/or
wherein the first analog communication interface and the second analog communication interface include at least one of an analog voltage communication interface and an analog current communication interface.

3. The sensor according to one of the preceding claims,
wherein the signal transceiver module (3) comprises of:
a micro control unit module (31) which has a third communication interface (31b) and said second communication interface (31a) and is used for data conversion between said second communication interface (31a) and said third communication interface (31b); and
a single pair Ethernet module (32) which has a fourth communication interface (32a) and said single pair Ethernet interface (32b) and is used for data conversion between said fourth communication interface (32a) and said single pair Ethernet interface (32b),
wherein the third communication interface (31b) of the micro control unit module (31) is connected to the fourth communication interface (32a) of the single pair Ethernet module (32).

4. The sensor according to claim 3,
wherein the third communication interface (31b) and the fourth communication interface (32a) include at least one of MII interface, RMII interface, and SPI interface.

5. The sensor according to any of the preceding claims,
wherein the sensor is at least one of a pressure sensor, a force sensor, a temperature sensor, or a vibration sensor;
wherein the sensor element (1) is used to detect at least one of pressure, force, temperature, or vibration of the detected object and convert the detected pressure, force, temperature, or vibration into a corresponding electrical signal, and/or
wherein the data line power supply module (4) comprises of:
an EMC protection circuit (41), whose input end is used to connect to the data line of the single pair Ethernet;
a power coupling circuit (42), whose input end is connected to the output end of the EMC protection circuit (41), and whose output end is connected to DC power interfaces of the signal processing module (2) and the signal transceiver module (3); and
an AC coupling circuit (43), whose input end is connected to the output end of the EMC protection circuit (41), and whose output end is connected to physical layer interfaces (30) of the signal processing module (2) and the signal transceiver module (3).

6. A data line power supply module, comprising:
an EMC protection circuit (41), whose input end is used to connect to a data line of a single pair of Ethernet;
a power coupling circuit (42), whose input end is connected to the output end of the EMC protection circuit (41), and whose output end is used to connect to DC power interfaces of various functional modules (2, 3) of the sensor; and
an AC coupling circuit (43), whose input end is connected to the output end of the EMC protection circuit (41), and whose output end is used to connect to physical layer interfaces (30) of various functional modules (2, 3) of the sensor.

7. The data line power supply module according to claim 6, further comprising:
a node recognition circuit (44), whose input end is connected to the output end of the EMC protection circuit (41);
an anti-surge circuit (45), whose input end is connected to the output end of the AC coupling circuit (43); and
a common mode filtering circuit (46), whose input end is connected to the output end of the anti-surge circuit (45), and whose output end is used to connect to the physical layer interfaces (30) of various functional modules (2, 3) of the sensor, and/or
wherein the EMC protection circuit (41) comprises of:
a surge protection circuit, including:
a bidirectional steady-state diode TVS1, both ends of which are connected to the data lines of the single pair Ethernet;
a capacitor C50, one end of which is connected to one end of the bidirectional steady-state diode TVS1, and the other end of which is grounded; and
a capacitor C51, one end of which is connected to the other end of the bidirectional steady-state diode TVS1, and the other end of which is grounded.

8. The data line power supply module according to one of the claims 6 or 7,
wherein the EMC protection circuit (41) further comprises of:
a static discharge protection circuit, including:
a varistor MOV1, one end of which is connected to one end of the capacitor C51 and the other end of the bidirectional steady-state diode TVS1, and the other end of which is grounded; and
a varistor MOV2, one end of which is connected to one end of the capacitor C50 and one end of the bidirectional steady-state diode TVS1, and the other end of which is grounded.

9. The data line power supply module according to one of the claims 6 to 8,
wherein the power coupling circuit (42) comprises of:
a coupling inductor L2, one ends of two coils of which are respectively connected to two output ends of the EMC protection circuit (41), and the other end of one coil is grounded;
a unidirectional diode D3, a positive pole of which is connected to the other end of the other coil of the coupling inductor L2, and the negative pole of which is used to connect to the DC power interfaces of various functional modules (2, 3) of the sensor; and
a resistor R21 used to be connected in series between the negative pole of the unidirectional diode D3 and the DC power interface of the functional module of the sensor.

10. The data line power supply module according to one of the claims 6 to 9,
wherein the AC coupling circuit (43) comprises of:
a capacitor C17, one end of which is connected to one output end of the EMC protection circuit (41);
a capacitor C18, one end of which is connected to the other output end of the EMC protection circuit (41);
a resistor R13, one end of which is connected to one end of the capacitor C17 and one output end of the EMC protection circuit (41), and the other end of which is grounded; and
a resistor R14, one end of which is connected to one end of the capacitor C18 and the other output end of EMC protection circuit (41), and the other end of which is grounded.

11. The data line power supply module according to one of the claims 6 to 10,
wherein the node recognition circuit (44) comprises of:
a resistor R15, one end of which is connected to one output end of the EMC protection circuit (41);
a resistor R16, one end of which is connected to the other output end of the EMC protection circuit (41);
a capacitor C19, one end of which is connected to the other end of the resistor R15, and the other end of which is grounded; and
a capacitor C20, one end of which is connected to the other end of the resistor R16, and the other end of which is grounded.

12. The data line power supply module according to claim 10,
wherein the anti-surge circuit (45) comprises of:
a resistor R18, one end of which is connected to the other end of the capacitor C17; and
a resistor R17, one end of is connected to the other end of the capacitor C18.

13. The data line power supply module according to claim 12,
wherein the common mode filtering circuit (46) comprises of:
a coupling inductor L1, one ends of two coils of which are respectively connected to the other ends of the resistors R18 and R17;
a resistor R11, both ends of which are respectively connected to two ends of one coil of the coupling inductor L1; and
a resistor R12, both ends of which are respectively connected to two ends of the other coil of the coupling inductor L1,
wherein the other ends of the two coils of the coupling inductor L1 are used to connect to the physical layer interfaces (30) of the various functional modules (2, 3) of the sensor.

14. The data line power supply module according to one of the claims 6 to 13, further comprising:
a single pair Ethernet connector (40) which is connected to the input end of the EMC protection circuit (41) and is suitable for mating with a mating connector of a single pair Ethernet end, for electrically connecting the input end of the EMC protection circuit (41) to the data line of the single pair Ethernet.

15. A sensor, comprising:
a sensor element (1) used to detect a physical quantity of a detected object and convert the detected physical quantity into an electrical signal;
a signal processing module (2) connected to the sensor element (1) for processing the received electrical signal and having a first communication interface (2a) for outputting the processed electrical signal;
a signal transceiver module (3), including:
a second communication interface (31a) connected to the first communication interface (2a) of the signal processing module (2) for receiving the processed electrical signal; and
a single pair Ethernet interface (32b) for connecting to a single pair Ethernet device (5) to transmit the processed electrical signal through a single pair Ethernet; and
the data line power supply module (4) as claimed in any one of claims 9-18, which is used to connect to a data line of the single pair of Ethernet to provide power to the signal processing module (2) and the signal transceiver module (3) through the data line of the single pair of Ethernet.
